(19) Europäisches Patentamt / European Patent Office / Office européen des brevets

(11) **EP 4 576 854 A1**

(12) **EUROPEAN PATENT APPLICATION**

(43) Date of publication:
**25.06.2025 Bulletin 2025/26**

(21) Application number: **23218052.1**

(22) Date of filing: **19.12.2023**

(51) International Patent Classification (IPC):
**H04W 12/06** (2021.01)     **H04L 9/32** (2006.01)
**H04W 4/80** (2018.01)

(52) Cooperative Patent Classification (CPC):
**H04W 12/06; H04L 9/0643; H04L 9/3236;
H04W 4/80;** H04L 2209/34; H04L 2209/805

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **EM Microelectronic-Marin SA
2074 Marin (CH)**

(72) Inventors:
• **PRETORIUS, Albertus Jacobus
 Karalee, 4306 (AU)**

• **SPRINGER, James
 Newport, 97365 (US)**
• **GUNAY, Mustafa
 28215 Bremen (DE)**
• **SALGADO, Stéphanie
 2520 La Neuveville (CH)**
• **EBERHARDT, Thomas
 2053 Cernier (CH)**

(74) Representative: **ICB SA
Faubourg de l'Hôpital, 3
2001 Neuchâtel (CH)**

(54) **METHOD FOR VERIFYING THE CONFORMITY OF A NDEF MESSAGE**

(57)     The invention relates to a method for verifying the conformity of a NDEF message (MC, MS) based on a processing of a previous NDEF message (MP) sent by a same transponder (2) to an electronic system (3) configured to process such messages (MP, MC, MS), the method consisting of:
- transmitting (20) the NDEF message (MC, MS) by the transponder (2) to the electronic system (3) in which this NDEF message (MC, MS) is designed (22) by the transponder (2) in generating (23) transponder-defined data constituting this NDEF message (MC, MS), these transponder-defined data comprising at least one NDEF Record consisting in generic data (GD) and a token ($T_{i+1}$, $T_{i+a}$) including data containing a random number ($RN_{i+1}$, $RN_{i+a}$) and a one-way function value ($V_{i+1}$, $V_{i+a}$) computed from a random number ($RN_i$) contained in the previous NDEF message (MP);
- controlling (24) the regularity of the token ($T_{i+1}$, $T_{i+a}$) comprised in the NDEF message (MC, MS) received by the electronic system (3); and
- broadcasting (37) an informative message relating to conformity of the NDEF message (MC, MS) when the regularity of this token ($T_{i+1}$, $T_{i+a}$) has been controlled.

Fig. 3

**Description**

Field of the invention

The present invention relates to a method for verifying the conformity of a NDEF message on the basis of a processing of a previous NDEF message sent by a same transponder to an electronic system.

Background of the invention

Advances in technology have resulted in smaller and more powerful personal computing devices. Personal computing devices include wireless handheld devices such as smart phones and tablet devices.

Wireless handheld devices are configured to operate within wireless communication systems and are widely deployed to provide various telecommunication services such as telephony, video, data, messaging, and broadcasts. Further, wireless handheld devices may be configured to communicate using a variety of frequencies and applicable coverage areas, such as cellular communications, wireless local area network (WLAN) communications, NFC (acronym for "Near Field Communication"), RFID (acronym for *"Radio Frequency Identification"*), etc. These communication methods are used to provided and share information to the operator and the multiple sources using the communication methods. The information may be process over a plurality of the sources.

NFC can operate in a short-range wireless technology, which typically requires a "near-field" separation (e.g., of 10 cm or less). NFC involves an initiator and a target, the initiator actively generates an RF field that can power a passive target. The target may then transmit one or more messages to the initiator using the power of the RF field. This enables NFC targets to take low-complexity form factors such as unpowered tags, stickers, or cards, etc.

There exists a need for further improvements in NFC technologies.

Summary of the invention

The invention relates to a method for verifying the conformity of a NDEF message on the basis of a processing of a previous NDEF message sent by a same transponder to an electronic system configured to process such messages, the method consisting of in:

- transmitting the NDEF message by the transponder to the electronic system in which this NDEF message is designed by the transponder in generating transponder-defined data constituting this NDEF message, these transponder-defined data comprising at least one NDEF Record consisting in generic data and a token including data containing a random number and a one-way function value computed from a random number contained in the previous NDEF message;

- controlling the regularity of the token comprised in the NDEF message received by the electronic system; and

- broadcasting an informative message relating to conformity of the NDEF message when the regularity of this token has been controlled.

In other embodiments:

- the step of control of the regularity of the token comprises a verification of the integrity of data of the token and/or the generic data associated to this token based on a cyclic redundancy check value included in the data constituting the token;

- the step of control of the regularity of the token comprises a check that the random number included in the token is different from the random number included in the previous NDEF message;

- the step of control of the regularity of the token comprises a check that the counter token included in the token is different from the counter token included in the token of the previous NDEF message;

- the step of control of the regularity of the token comprises a check that the one-way function value included in the token of this NDEF message received is equal to the one-way function value computed by the electronic system;

- when the two one-way function values are not equal, the check comprises computing the one-way function value from an exclusive OR logic function applied between the token counter value comprised in the token of the received NDEF message and a local counter calculated by incrementing the local counter of the preceding NDEF message from a number until said calculated one-way function value is equal to said one-way function value;

- this number is an increment number when the local counter values are generated from incremental local counters;

- this number is a random number when the local counter values are generated from random local counters;

- the step of control of the regularity of the token comprises a check that a local counter value included in the token counter value of the token of the NDEF message received, is equal to a local counter value computed based on a local counter value comprised in the token of the previous NDEF message;

- the step of control of the regularity of the token comprises a check that a local counter value is strictly greater than the local counter value comprised in the token of the previous NDEF message;

- the step of control of the regularity of the token comprises a check that a local counter value is strictly smaller than the computed local counter value incremented by the constant value equal to one, this local counter value being computed based on the local counter value.

The invention relates to a system for verifying the conformity of a NDEF message based on a processing of a previous NDEF message sent by a same transponder to an electronic system configured to process such messages the system implementing this method.
In other embodiments:

- the electronic system consisting of a transponder reader and a server to which this transponder reader is connected;

- the electronic system consisting solely of a transponder reader.

Brief description of the drawings

The present invention will be described subsequently in more detail with reference to the attached drawing, given by way of examples, but in no way limited thereto, in which:

- Figure 1 is a system for verifying the conformity of a NDEF message more specifically here the validity of this message, the system comprising a transponder and an electronic system including only a transponder reader, according to embodiments of the present disclosure;

- Figure 2 is a system for verifying the conformity of a NDEF message more specifically here the validity and the authenticity of this message, the system comprising a transponder and an electronic system including a transponder reader and a server, according to embodiments of the present disclosure; and

- Figure 3 is a flow chart of a method for verifying the authenticity of the NDEF message, according to embodiments of the present disclosure.

Detailed description of the invention

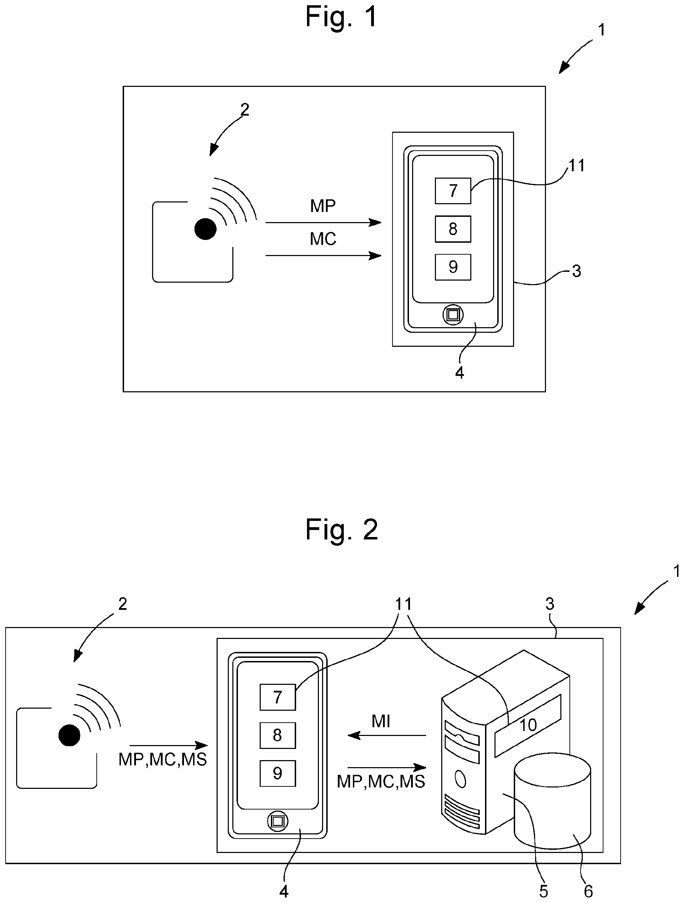

The following description is intended to illustrate specific embodiments of the invention, and not to limit the invention. Thus, nothing in this detailed description is intended to imply that any particular feature, characteristic or component is essential to the invention. The invention is defined only by the claims.
Referring now to the figures 1, 2 and 3, embodiments of the present invention, relate to a system 1 and a method for verifying the conformity of a NDEF message MC, MS transmitted by a transponder 2 also called tag, which is included in a device such as an NFC Tag. This transponder 2 consists of a chip (also referred to as an *"integrated circuit"*) and an antenna. This transponder 2 can include a support element, also known as an *"inlay"*, preferably made of plastic or paper, comprising an adhesive layer. This support element is designed to carry said antenna and chip which are moreover connected together.
Such a transponder 2 may be associated with, attached to, or included in, an object or an article. It is understandable that in such a context, this object/article is part of this system 1. Such an object/article is for example: a garment, a label, a poster, a vehicle license plate, etc.
In the embodiments of the invention, these system 1 and method can verify the conformity of a NDEF message

MC, MS based on a processing of a previous NDEF message MP sent by the same transponder 2. In this context, verifying the conformity of a NDEF message MC, MS consists of verifying only the validity of this NDEF message MC, MS in a non-connected mode, or verifying the validity and the authenticity of this NDEF message MC, MS in a connected mode. Moreover, this verification is carried out on the basis of a NDEF message MP, previously transmitted by the transponder 2. These non-connected and connected modes will be explained in more detail later.

It can be noted that, in this context, the previous NDEF message MP and the NDEF message referenced "MC" are consecutive messages and the previous NDEF message MP and the NDEF message referenced "MS" are successive messages. It may be noted that the previous NDEF message MP can be also called *"first NDEF* message" transmitted by the transponder 2, and the NDEF messages MC, MS, "a *second NDEF* message".

Each of these NDEF message MP, MC and MS, is an NFC Forum Data Exchange Format message. The NDEF defines here an encapsulation format of information during information exchange, where the information is transmitted between the transponder reader 4 (or between an NFC terminal) and the transponder 2 (or an NFC tag). The NDEF is a lightweight binary message format, and it can be used to encapsulate information like one or more transponder-defined-data of any type and any size.

These transponder-defined data comprise at least one NDEF Record consisting in a NDEF Record Header and a NDEF Record Payload. This NDEF Record Payload comprises generic data GD and a token $T_i$, comprising token data. In this context, the generic data include for example:

- a serial number of the transponder 2 also called by the acronym "*SN*";

- a flag or any information describing the current state of the transponder;

- a uniform resource identifier also called by the acronym "URI";

- an image;

- an object/article information;

- a message or device signature;

- a text (e.g., plaintext) ;

- a signature and/or length associated with at least one of the generic data;

- etc.

In the embodiments of the invention, these generic data GD are all concatenated together with the data of the token $T_i$ in order to form the transponder-defined-data. More specifically and for a better understanding of the embodiments of this invention, the previous NDEF message MP can be defined by this following formula:

$$MP = GD \parallel T_i$$

with:

- MP: the previous NDEF message;
- GD: the generic data comprising for example the URI, the SN and/or any information describing the previous state of the transponder 2;
- $T_i$: the token of this previous NDEF message associated with these generic data GD, with i > 0.

In this previous NDEF message MP, the token $T_i$ can be defined by the following formula:

$$T_i = CT_i \parallel RN_i \parallel V_i \qquad\qquad i > 0$$

with:

- $CT_i$: a token counter value computed from an exclusive OR logic function applied between a random number $RN_{i-1}$ comprised in a previously generated NDEF message (prior to this previous NDEF message MP) transmitted by the transponder 2, and a local counter Ci, this token counter value being defined by the following formula:

$$CT_i = (RN_{i-1} \text{ xor } C_i)$$

- RNi: a random number of this previous NDEF message MP;
- Vi: an one-way function value computed from the random number $RN_{i-1}$ comprised in a previously generated NDEF message (prior to this previous NDEF message MP) transmitted by the transponder 2, this one-way function value can be defined by the following formula:

$$V_i = H(RN_{i-1}),$$

with H an one-way function such as a cryptographic hash function, for example.

In these embodiments of this invention, the NDEF message MC generated by the transponder 2 consecutively to the previous NDEF message MP, can be defined by the following formula:

$$MC = GD \parallel T_{i+1}$$

with:

- MC: the consecutive NDEF message generated by the transponder 2, directly following the generation of a previous NDEF message MP;
- GD: the generic data comprising for example the URI, the SN and/or any information describing the consecutive state of the transponder 2;
- $T_{i+1}$: the token of this consecutive NDEF message MC associated with these generic data GD, with i > 0.

In this consecutive NDEF message MC, the token $T_{i+1}$ can be defined by the following formula:

-

$$T_{i+1} = CT_{i+1} \parallel RN_{i+1} \parallel V_{i+1} \qquad\qquad i > 0$$

with :

- $CT_{i+1}$: a token counter value computed from an exclusive OR logic function applied between a random number RNi comprised in the previous NDEF message MP and a local counter $C_{i+1}$, this token counter value being defined by the following formula:

$$(RN_i \text{ xor } C_{i+1})$$

- $RN_{i+1}$: a random number of this consecutive NDEF message MC;
- $V_{i+1}$: a one-way function value computed from the random number RNi comprised in the previous NDEF message MP transmitted by the transponder 2, this one-way function value being defined by the following formula:

$$V_{i+1} = H(RN_i),$$

with H a one-way function such as a cryptographic hash function, for example.

In these embodiments of this invention, the NDEF message MS generated by the transponder 2 successively to the previous NDEF message MP, can be defined by the following formula:

$$MS = GD \parallel T_{i+a}$$

with:

- MS: the successive NDEF message generated by the transponder 2 following the previous NDEF message MP, between these two messages, one or more NDEF messages may have been transmitted by the transponder 2 and not received by the electronic system 3, e.g., the server 5;
- GD: the generic data comprising for example the URI, the SN and/or any information describing the successive state of the transponder 2;
- $T_{i+a}$: the token of this successive NDEF message MS associated with these generic data GD, with $i > 0$ and $a > 1$;

In this successive NDEF message MS, the token $T_{i+a}$ can be defined by the following formula:

$$T_{i+a} = CT_{i+a} \parallel RN_{i+a} \parallel V_{i+a} \qquad\qquad i > 0 \text{ and } a > 1$$

with :

- $CT_{i+a}$: a token counter value computed from an exclusive OR logic function applied between a random number $RN_{i+a-1}$ of a NDEF message never received by the electronic system 3 and which has been emitted by the transponder 2 after the previous message MP and before this successive NDEF message MS, and a local counter value $C_{i+a}$, the token counter value being defined by this formula: $(RN_{i+a-1} \text{ xor } C_{i+a})$
- $RN_{i+a}$: a random number comprised in this successive NDEF message MS;
- $V_{i+a}$: a one-way function value computed from the random number $RN_{i+a-1}$, this one-way function value can be defined by the following formula:

$$V_{i+a} = H(RN_{i+a-1}),$$

with H a one-way function such as a cryptographic hash function, for example.

It can be noted that, the token Ti, $T_{i+1}$, $T_{i+a}$ of each NDEF message MP, MC, MS generated by the transponder 2 can also include additional data concatenated with those previously described. These additional data may concern information on at least one data included in the generated NDEF message MP, MC, MS that is to say at least one data comprised in the generic data GD or in this token Ti, $T_{i+1}$, $T_{i+a}$. Such additional data comprises for example a cyclic redundancy check value (also called by the acronym *"CRC value"*) consistent with at least one data of the generic data GD (for example: a SN, an URI, etc) and/or at least one data of the token Ti, $T_{i+1}$, $T_{i+a}$.

In the embodiments of this invention, the system 1 for verifying the conformity of a NDEF message MC, MS, includes the transponder 2 as well as an electronic system 3 configured to process the NDEF messages MP, MC, MS that it receives.

In this context, the electronic system 3 may consist solely of a transponder reader 4, or of a transponder reader 4 and a server 5.

In this electronic system 3, this transponder reader 4 can be for example an NFC terminal or an NFC device. The NFC terminal is a terminal having an NFC function, such as a mobile phone, a tablet computer, or a camera.

Such a transponder reader 4 integrates a control unit 7 including hardware and software resources in particular at least one processor cooperating with memory components. This control unit 7 is a logical entity responsible for transmitting data to a communication module 8 including a radio frequency interface, in this case an NFC radio frequency interface. In this context, this control unit 7 is configured to manage communications with the transponder 2, as well as with the server 5 when the electronic system 3 includes one, in order to process the NDEF messages MP, MC, MS received. Thus, the communication module 8 is configured to establish a connection and manage data exchanges with this transponder 2 as well as with the server 5 when the electronic system 3 includes one.

This transponder reader 4 also includes a broadcast module 9 configured to diffuse an informative message MI relating to the verification of the conformity of a NDEF message MC, MS received, i.e., whether or not this NDEF message MC, MS is valid, or valid and authentic. Such a broadcast module 9 is connected to the control unit 7 of the transponder reader 4, and comprises:

- a display module such as a screen displaying a visual representation of the informative message MI; and/or

- an audio module such as a loudspeaker for broadcasting a sound wave relating to this informative message MI.

In this electronic system 3, the server 5 offers services accessible via a network and it can be hardware or software server 5. Such a server 5 comprises a controller 10 and a database 6, this database 6 being connected to this controller 10 and comprising data relating notably to NDEF messages MP, MC, MS received.

To a better understanding of the invention, the electronic system 3 includes a control module 11 which comprises:

- solely the control unit 7 of the transponder reader 4, when this electronic system 3 consists solely of a transponder reader 4; or

- this control unit 7 and the controller 10 of the server 5 when this electronic system 3 comprises both, i.e., the server 5 and the transponder reader 4.

Moreover, in this electronic system 3, the control module 11 comprises:

- one or several one-way functions that can be used when a NDEF message MP, MC, MS, is processed and also cyclic redundancy check (known by the acronym "CRC") algorithms to control the consistency of at least one data of the generic data GD (for example: a SN, an URI, etc) and/or at least one data of the token Ti, $T_{i+1}$, $T_{i+a}$; and

- the database 6 of the server 5 when this electronic system 3 comprises both, i.e., the server 5 and the transponder reader 4, as depicted in Figure 2.

Furthermore, the database 6 of the server 5 can comprise in a non-limitative and non-exhaustive way: the local counter Ci and the random number RNi of the last NDEF message received and processed/controlled, in our embodiments this last NDEF message is the previous NDEF message MP.

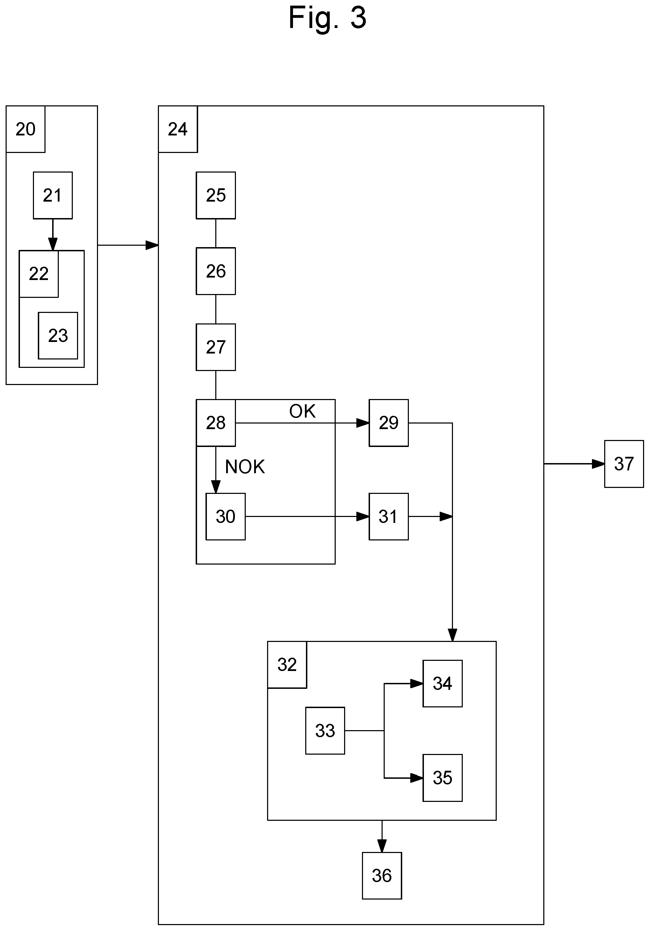

In reference to figure 3, the system 1 is able to implement a method for verifying the conformity of the NDEF message MC, MS received by the electronic system 3 from the transponder 2, on the basis of a processing of a previous NDEF message MP sent by the same transponder 2 to this electronic system 3 configured to process such messages MP, MC, MS.

As already discussed, this method is implemented by the electronic system 3 comprising:

- the transponder reader 4 configured solely for verifying the conformity, more specifically the validity, of the NDEF message MC received by the electronic system 3 from the transponder 2, in the so-called "non-connected mode" or "offline mode", as depicted in figure 1; or

- the transponder reader 4 and the server 5 for verifying the conformity, more specifically the validity and the authenticity, of the NDEF message MC, MS received by the electronic system 3 from the transponder 2, in the so called "connected mode" or "online mode", as depicted in figure 2.

Such a method includes a step of transmission 20 of the NDEF message MC, MS by the transponder 2 to the electronic system 3. This NDEF message MC, MS is transmitted to the electronic system 3, consecutively (regarding MC) or successively (regarding MS) to the previous NDEF message MP, after this last one has also been generated and transmitted by this same transponder 2 to this electronic system 3.

Such a step 20 comprises a sub-step of establishing 21 a communication between the transponder 2 and the electronic system 3. More specifically, this communication is established between this transponder 2 and the transponder reader 4 of this electronic system 3, over a short distance. This short distance is configured to establish near-field communication between this transponder 2 and the transponder reader 4.

Then, this step 20 includes a sub-step for designing 22 this NDEF message MC, MS to be transmitted to the electronic system 3. This sub-step 22 is implemented by the transponder 2 and more particularly by its chip. Such a sub-step 22 comprises a phase of generating 23 transponder-defined data constituting this NDEF message MC, MS, this data comprising at least one NDEF Record consisting in generic data GD and the token $T_{i+1}$, $T_{i+a}$. It is understood that these generic data GD and/or the token $T_{i+1}$, $T_{i+a}$ can be included in one or several records.

Thereafter, the method comprises a step for controlling 24 the regularity of the token $T_{i+1}$, $T_{i+a}$ of this NDEF message MC, MS received. Indeed, in this method, if the token $T_{i+1}$, $T_{i+a}$ is conformed/compliant then the validity in non-connected mode, or the validity and the authenticity in connected mode of the NDEF message MC, MS is verified. Such a step 24 is implemented by the electronic system 3. In this context, it can be noticed that this step for controlling 24 the regularity can be: a step for controlling 24 the validity only of the NDEF message MC, MS in the non-connected mode, and a step for controlling 24 the validity and the authenticity of the NDEF message MC, MS in connected mode.

When the data constituting this token $T_{i+1}$, $T_{i+a}$ comprises additional data like for example a cyclic redundancy check value consistent with at least one data of the generic data GD and/or at least one data of that token $T_{i+1}$, $T_{i+a}$, this step 24 includes a sub step of verification 25 of the integrity of data of this token $T_{i+1}$, $T_{i+a}$ and/or the generic data GD, based on this cyclic redundancy check value comprised in the data constituting the token $T_{i+1}$, $T_{i+a}$. During this sub-step 25, the control module 11 of the electronic system 3 - for example the controller 10 and/or the control unit 7 - can implement the CRC algorithm based on this CRC value in order to verify the integrity of the data of the token $T_{i+1}$, $T_{i+a}$ and/or the generic data GD.

Once the integrity of the data has been verified, the step 24 comprises a sub-step for checking 26 that the random number $RN_{i+1}$, $RN_{i+a}$ is different from the random number RNi included in the token Ti of the previous NDEF message MP. As discussed before, this random number RNi is already stored in the database 6 of the server 5 in the case the electronic system 3 comprises both the server 5 and the transponder reader 4. Otherwise, in the case the electronic system 3 consists solely of a transponder reader 4, the previous NDEF message MP is locally and temporarily stored in the memory elements of the control unit 7. In this context, if this random number $RN_{i+1}$, $RN_{i+a}$ is different than the random number RNi, then proceed to the following check with the sub-step 27. A difference between these two random numbers $RN_{i+1}$, $RN_{i+a}$ and RNi means that the two NDEF messages - the previous message MP and the NDEF message MC, MS received - are different, and that these two random numbers $RN_{i+1}$, $RN_{i+a}$ and RNi evolve randomly.

The step 24 also comprises a further sub-step for checking 27 that the counter token $CT_{i+1}$, $CT_{i+a}$ of the NDEF message MC, MS received, is different from the counter token CTi included in the token Ti of the previous NDEF message MP. In the same way as for the random number RNi and in the case the electronic system 3 comprises both the server 5 and the transponder reader 4, the local counter Ci comprised in this counter token CTi is also already stored in the database 6 of the server 5. Otherwise, in the case the electronic system 3 consists solely of a transponder reader 4, the previous NDEF message MP is locally and temporarily stored in the memory elements of the control unit 7. Thus, if this counter token $CT_{i+1}$, $CT_{i+a}$ is different than the counter token CTi, then proceed to the following check with the sub-step 28. It should be noted that the difference between these two counters token $CT_{i+1}$, $CT_{i+a}$ and CTi means that the two NDEF messages MP, MC, MS - the previous message MP and the NDEF message MC, MS received - are different, and that these two counters token $CT_{i+1}$, $CT_{i+a}$ and CTi evolve random ly.

Furthermore, the step 24 comprises a sub-step for checking 28 that a one-way function value $V_{i+1}$, $V_{i+a}$ included in the token $T_{i+1}$, $T_{i+a}$ of this NDEF message MC, MS received, is equal to the one-way function value $V_c$ computed by the electronic system 3, notably by the transponder reader 4 and/or the server 5. During this sub-step 28, the one-way function value $V_c$ is computed from the random number RNi already stored in the database 6 of the server 5, and/or comprised in the previous NDEF message MP. As discussed before, the control module 11 of the electronic system 3 - the control unit 7 of the transponder reader 4 and/or the controller 10 of the server 5 - computes this one-way function value $V_c$ by executing the following mathematical function:

$$V_c = H(RN_i)$$

with,

- $V_c$: the computed one-way function value;

- H: the one-way function executed by the control module 11, for example the cryptographic hash function;

- $RN_i$: the random number provided by the previous NDEF message MP, and/or already stored in the database 6 of the server 5.

In this context, if the one-way function value $V_{i+1}$ included in the NDEF message MC is equal to the one-way function value $V_c$ computed, the two NDEF messages MP and MC - the previous message MP and the consecutive NDEF message MC received - are chained and consecutively linked together. At this stage, and following verifications performed during steps 25, 26, 27 and 28, the validity of the token $T_{i+1}$ of this NDEF message MC received is verified. Consequently, the validity of this NDEF message MC is also verified.

At this stage, following this sub-step 28, step 24 includes a sub-step for storing 29 in the database 6 of the server 5: the local counter value $C_{i+1}$ contained in the counter token $CT_{i+1}$ and the random number $RN_{i+1}$ extracted from the NDEF message MC.

During the sub-step for checking 28, if the one-way function value $V_{i+a}$ is not equal to the computed one-way function value $V_c$, this means that the NDEF message received is not a consecutive NDEF message MC. In other words, the previous NDEF message MP and the NDEF message received MS are not consecutive NDEF messages. This particular situation happens when one or more NDEF messages may have been transmitted by the transponder 2 and not received by the electronic system 3, e.g., the server 5.

For memory, this successive NDEF message MS is defined by the formula:

$$MS = GD \parallel T_{i+a}$$

with:

$$T_{i+a} = CT_{i+a} \;\|\; RN_{i+a} \;\|\; V_{i+a} = (RN_{i+a-1} \; xor \; C_{i+a}) \;\|\; RN_{i+a} \;\|\; V_{i+a}$$

In this case, when the NDEF message is a successive NDEF message MS of the previous NDEF message MP, that means not a consecutive one, the sub-step 28 comprises a phase for computing 30 the one-way function value $V_c$ from an exclusive OR logic function applied between the token counter value $CT_{i+a}$ comprised in the token $T_{i+a}$ of the received NDEF message MS and a local counter $C_L$ calculated by incrementing the local counter Ci of the previous NDEF message MP from a number "a" until said calculated one-way function value $V_c$ is equal to said one-way function value $V_{i+a}$. This number a is, for example, an increment number a, with a > 1, when the local counter values Ci and $C_{i+a}$ are generated from incremental local counters.

Such a phase 30 contributes to extract the random number $RN_{i+a-1}$ contained in the token counter value $CT_{i+a}$ in order to compute the one-way function value $V_c$. It must be notice here that the random number $RN_{i+a-1}$ is the random number of the NDEF message never received by the electronic system 3 and from which the NDEF message MS received - the so-called successive NDEF message MS - is consecutive. Therefore, during this phase 30 the computed local counter $C_L$ is incremented from the increment number "a", with a > 1, until the computed one-way function value $V_c$ is equal to the received one-way function value $V_{i+a}$, and therefore until this computed local counter $C_L$ is equal to the local counter $C_{i+a}$ of the token counter value $CT_{i+a}$.

In other words, the computed one-way function value $V_c$ can be defined by the following mathematical formula:

$$V_c = H(CT_{i+a} \; xor \; C_L) = H((RN_{i+a-1} \; xor \; C_{i+a}) \; xor \; (C_i + a)) = V_{i+a} \quad a>1 \; and \; i>0$$

with :

- $V_c$: the computed one-way function value when the NDEF messages referenced MP and MS are not consecutives messages received by the electronic system 3;

- $CT_{i+a}$: the token counter value comprised in the token $T_{i+a}$ of the NDEF message received, here the so-called successive NDEF message MS;

- $C_L$: the computed local counter value obtained by incrementing the local counter Ci of the previous NDEF message MP according to the increment number "a", with a > 1, this computed local counter being defined by the formula: $C_L = Ci + a$;

- $RN_{i+a-1}$: the random number of the NDEF message never received by the electronic system 3 and which has been emitted by the transponder 2 after the previous message MP et before this NDEF message referenced MS;

- a: the increment number of an incremental counter;

- $V_{i+a}$: the one-way function value included in the token $T_{i+a}$ of the NDEF message MS received.

Once the equality between these two one-way function values $V_{i+a}$, $V_c$ has been verified, the step 24 includes a sub-step of storing 31 in the database 6 of the server 5, the computed local counter value $C_L$ (= $C_{i+a}$) and the random number $RN_{i+a}$ related to this successive NDEF message MS. Indeed, in this context, the computed local counter value $C_L$ (= $C_{i+a}$) and the random number $RN_{i+a}$ are considered to be respectively the local counter value and the random number included in this successive NDEF message MS.

In embodiments of the invention and regarding the phase for computing 30, the number "a" can be a random increment "a" when the local counter values $C_i$ and $C_{i+a}$ are generated from random local counters with this random number "a" which is comprised in a specific range of values and stored in the database 6 of the server 5.

In this context, the equality between these two one-way function values $V_{i+a}$ and $V_c$ means that the two NDEF messages MP and MS - the previous message MP and the successive NDEF message MS received - are chained and successively linked together. At this stage, and following verifications performed during steps 25, 26, 27, 28 and 30, the validity of the token $T_{i+a}$ of this NDEF message MS received is verified. Consequently, the validity of this NDEF message MS is also verified.

This step for controlling 24 also includes a further sub-step for checking 32 that a local counter value $C_{i+1}$, $C_{i+a}$ included in the token counter value $CT_{i+1}$, $CT_{i+a}$ of the token $T_{i+1}$, $T_{i+a}$ of the NDEF message MC, MS received, is equal to a local counter value $C_p$ computed based on a local counter value Ci comprised in the token Ti of the previous NDEF message MP.

This sub-step 32 comprises a phase of extraction/determination 33 of the local counter value $C_{i+1}$, $C_{i+a}$ from an exclusive OR logic function applied between the random number RNi comprised in the token Ti of the previous NDEF message MP and the token counter value $CT_{i+1}$, $CT_{i+a}$ included in the token $T_{i+1}$, $T_{i+a}$ of the NDEF message MC, MS received. During this sub-step 32, the control module 11 of this electronic system 3, e.g., the controller 10 of the server 5, executes this formula:

$$C_{i+a} = CT_{i+a} \text{ xor } RN_i = (RN_i \text{ xor } C_{i+a}) \text{ xor } RN_i$$

with :

- RNi: the random number provided by the previous NDEF message MP, this number being already stored in the database 6 of the server 5;
- $CT_{i+a}$: the token counter value, this value being computed from an exclusive OR logic function applied between the random number RNi comprised in the previous NDEF message MP, and the local counter $C_{i+a}$.

Note that in this formula is valid in the case of a successive NDEF message MC received. In the case of a consecutive NDEF message MC, the formula is the following one:

$$C_{i+1} = CT_{i+1} \text{ xor } RN_i = (RN_i \text{ xor } C_{i+1}) \text{ xor } RN_i$$

with :

- RNi: the random number provided by the previous NDEF message MP, this number being already stored in the database 6 of the server 5;
- $CT_{i+1}$: the token counter value, this value being computed from an exclusive OR logic function applied between the random number RNi comprised in the previous NDEF message MP, and the local counter $C_{i+1}$.

During this sub-step 32, when the local counter value $C_{i+1}$, Ci+a and the computed local counter value $C_p$, are values from incremental local counters with an increment number "a" with a > 0, this sub-step 32 comprises a phase for computing 34 the local counter value $C_p$ by incrementing the value of the local counter value Ci comprised in the token Ti of the previous NDEF message MP, with the increment number a. This local counter value Ci is already stored in the database 6 of the server 5.

Thus, if the local counter value $C_{i+1}$, $C_{i+a}$ included in the NDEF message MC, MS is equal to the computed local counter value $C_p$ the authenticity of the token $T_{i+1}$, $T_{i+a}$ of this NDEF message MC, MS received is verified. Consequently, the authenticity of this NDEF message MC, MS is also verified. That can be verified by this formula:

$$C_{i+a} = C_p = C_i + a$$

with:

- $C_{i+a}$: the local counter value of the successive NDEF message MS;
- Ci: the local counter value of the previous NDEF message MP;
- $C_p$: the computed local counter value defined by the mathematical formula:

$$C_p = C_i + a$$

- a: the increment number.

Note that in this formula is valid in the case of a successive NDEF message MC received. In the case of a consecutive NDEF message MC, the formula is the following one:

$$C_{i+1} = C_p = C_i + b$$

with:

- $C_{i+1}$: the local counter value of the consecutive NDEF message MC;

- Ci: the local counter value of the previous NDEF message MP;

- $C_p$: the computed local counter value defined by the mathematical formula:

$$C_p = C_i + b$$

- b: the increment number.

In remarks, if the local counter value $C_{i+1}$, $C_{i+a}$, is less than the computed local counter value $C_p$, the authenticity of the token $T_{i+1}$, $T_{i+a}$ of this NDEF message MC, MS received is not guaranteed. Consequently, the authenticity of this NDEF message MC, MS is also not guaranteed and that NDEF message MC, MS can be a replayed NDEF message. In addition, if the local counter value $C_{i+1}$, $C_{i+a}$ is greater than the computed local counter value $C_p$, the authenticity of the token $T_{i+1}$, $T_{i+a}$ of this NDEF message MC, MS received is also not guaranteed. Consequently, the authenticity of this NDEF message MC, MS is also not guaranteed and that NDEF message MC, MS can be malicious data.

During this sub-step 32, the increment number "a" can be replaced by a random number "a" when the local counter value $C_{i+1}$, $C_{i+a}$ and the computed local counter value $C_p$, are values from random local counters. Such a random number "a" contributes to generate random number comprised in a predefined range of values stored in the database 6 of the server 5.

In this context, the sub-step 32 comprises a phase for computing 35 the local counter value $C_p$ by adding the random number "a" to the local counter value Ci. The local counter value Ci which is included in the token Ti of the previous NDEF message MP, is already stored into the database 6 of this server 5.

This step for controlling 24 also includes a sub-step for checking 36 that the local counter value $C_{i+1}$, $C_{i+a}$ is strictly:

- greater than the local counter value Ci comprised in the token Ti of the previous NDEF message MP; and
- smaller than the computed local counter value $C_p$ incremented by the constant value equal to "1", this local counter value $C_p$ being computed based on the local counter value Ci.

In this context, if the local counter value $C_{i+1}$, $C_{i+a}$ included into the NDEF message MC, MS received, is comprised between this local counter value Ci and that computed local counter value $C_p$ incremented by the constant value equal to the number one, the authenticity of the token $T_{i+1}$, $T_{i+a}$ of this NDEF message MC, MS received is guaranteed. Consequently, the authenticity of this NDEF message MS, MC is also guaranteed. That can be verified by this formula:

$$C_p + 1 > C_{i+a} > C_i$$

with:

- $C_{i+a}$: the local counter value of the NDEF message MS;
- Ci: the local counter value of the previous NDEF message MP;
- $C_p$: the computed local counter value being defined by the mathematical formula: $C_p = C_i + a$, with "a" a random increment;

Note that in this formula is valid in the case of a successive NDEF message MC received. In the case of a consecutive NDEF message MC, the formula is the following one:

$$C_p + 1 > C_{i+1} > C_i$$

with:

- $C_{i+1}$: the local counter value of the NDEF message MC;
- Ci: the local counter value of the previous NDEF message MP;
- $C_p$: the computed local counter value being defined by the mathematical formula: $C_p = C_i + b$, with "b" a random increment;

In remarks, if the local counter value $C_{i+1}$, $C_{i+a}$ is less than or equal to local counter value Ci, the authenticity of the token $T_{i+1}$, $T_{i+a}$ of this NDEF message MC, MS received is not guaranteed. Consequently, the authenticity of this NDEF message MC, MS is also not guaranteed. In this context, such a NDEF message MC, MS can be a replayed NDEF message. In addition, if the local counter value $C_{i+1}$, $C_{i+a}$ is greater than or equal to the computed local counter value $C_p$ incremented by the constant value equal to the number one, the authenticity of the token $T_{i+1}$, $T_{i+a}$ of this NDEF message MC, MS received is also not guaranteed. Consequently, the authenticity of this NDEF message MC, MS is also not guaranteed and that NDEF message MC, MS can be malicious data.

It is understood here that the validity and the authenticity of the token $T_{i+1}$, $T_{i+a}$ of this NDEF message MC, MS received is verified and guaranteed by executing the sub-steps 25, 26, 27, 28, 30, 32 and 36 successively, simultaneously or in any order. It can be noted here that these sub-steps for checking referenced 25, 26, 27, 28, 30, 32 and 36, can also be called first, second, third, fourth, fifth, sixth and seventh sub-steps for checking respectively.

In addition, it should be noted that this step for controlling 24 the validity and the authenticity of the token $T_{i+1}$, $T_{i+a}$ of this NDEF message MC, MS comprising these sub-steps 25, 26, 27, 28, 30, 32 and 36 are implemented by the control module 11 of the electronic system 3. More specifically, this step 24 can be implemented by the transponder reader 4 (its control unit 7) and/or by the server 5 (its controller 10 and its database 6).

In some embodiments, the sub-step referenced 25, 26, 27 and 28 can be implemented by the control unit 7 of the transponder reader 4 without the need to be connected to a server 5. In other words, these sub-steps 25, 26, 27 and 28 can be implemented by the transponder reader 4 only. In this way, only the validity of the token $T_{i+1}$ of this NDEF message MC received can be verified here in the non-connected mode mentioned above.

Similarly, in some embodiments, the additional sub-steps referenced 29, 30, 31, 32 and 36 may be implemented by the server 5 that has received the NDEF message MC, MS from the transponder reader 4. In this way, the validity and the authenticity of the token $T_{i+1}$, $T_{i+a}$ of this NDEF message MC, MS received can be verified and guaranteed here in the connected mode previously mentioned.

In other embodiments, this step for controlling 24 can also be implemented by the transponder 2 and server 5 together, for example by sharing the implementation of at least one of these sub-steps 25, 26, 27, 28, 29, 30, 31, 32 and 36.

Then the method comprises a step for broadcasting 37 an informative message MI related to the conformity of the the NDEF message MC, MS that is to say the validity only or the validity and the authenticity of this NDEF message MC, MS. During this step 37, once the step for controlling 24 the validity of the token $T_{i+1}$, $T_{i+a}$ of this NDEF message MC, MS is achieved, the controller 10 of the server 5 generates an informative message MI to the transponder reader 4 based on the result of this control. This result is a validation or a non-validation of the validity only or the validity and the authenticity of this NDEF message MC, MS. Such an informative message MI can be for example a visual message or an audio message. This informative message MI is broadcasted by the transponder reader 4 and can be generated by the transponder reader 4 in the non-connected mode or by the server 5 in the connected mode.

The foregoing is only illustrative of preferred embodiments of the present invention. The present invention is not limited to the above embodiments. It should be understood that further improvements and changes that are directly derived or conceived by those skilled in the art without departing from the basic concept of the present invention should be considered to be included in the protective scope of the present invention.

**Claims**

1. Method for verifying the conformity of a NDEF message (MC, MS) based on a processing of a previous NDEF message (MP) sent by a same transponder (2) to an electronic system (3) configured to process such messages (MP, MC, MS), the method consisting of in:

   - transmitting (20) the NDEF message (MC, MS) by the transponder (2) to the electronic system (3) in which this NDEF message (MC, MS) is designed (22) by the transponder (2) in generating (23) transponder-defined data constituting this NDEF message (MC, MS), these transponder-defined data comprising at least one NDEF Record consisting in generic data (GD) and a token ($T_{i+1}$, $T_{i+a}$) including data containing a random number ($RN_{i+1}$, $RN_{i+a}$) and a one-way function value ($V_{i+1}$, $V_{i+a}$) computed from a random number (RNi) contained in the previous NDEF message (MP);
   - controlling (24) the regularity of the token ($T_{i+1}$, $T_{i+a}$) comprised in the NDEF message (MC, MS) received by the electronic system (3); and
   - broadcasting (37) an informative message relating to conformity of the NDEF message (MC, MS) when the regularity of this token ($T_{i+1}$, $T_{i+a}$) has been controlled.

2. The method according to the previous claim wherein controlling (24) the regularity of the token ($T_{i+1}$, $T_{i+a}$) comprises a verification (25) of the integrity of data of the token ($T_{i+1}$, $T_{i+a}$) and/or the generic data (GD) associated to this token

$(T_{i+1}, T_{i+a})$ based on a cyclic redundancy check value included in the data constituting the token $(T_{i+1}, T_{i+a})$.

3. The method according to any of the preceding claims, wherein controlling (24) the regularity of the token $(T_{i+1}, T_{i+a})$ comprises a check (26) that the random number $(RN_{i+1}, RN_{i+a})$ included in the token $(T_{i+1}, T_{i+a})$ is different from the random number $(RN_i)$ included in the previous NDEF message (MP).

4. The method according to any of the preceding claims, wherein controlling (24) the regularity of the token $(T_{i+1}, T_{i+a})$ comprises a check (27) that the counter token $(CT_{i+1}, CT_{i+a})$ included in the token $(T_{i+1}, T_{i+a})$ is different from the counter token $(CT_i)$ included in the token $(T_i)$ of the previous NDEF message (MP).

5. The method according to any of the preceding claims, wherein controlling (24) the regularity of the token $(T_{i+1}, T_{i+a})$ comprises a check (28) that the one-way function value $(V_{i+1}, V_{i+a})$ included in the token $(T_{i+1}, T_{i+a})$ of this NDEF message (MC, MS) received is equal to the one-way function value $(V_c)$ computed by the electronic system (3).

6. The method according to the previous claim, wherein when the two one-way function values $(V_{i+a}, V_c)$ are not equal, the check (28) comprises computing (30) the one-way function value $(V_c)$ from an exclusive OR logic function applied between the token counter value $(CT_{i+a})$ comprised in the token $(T_{i+a})$ of the received NDEF message (MS) and a local counter $(C_L)$ calculated by incrementing the local counter $(C_i)$ of the preceding NDEF message (MP) from a number until said calculated one-way function value $(V_c)$ is equal to said one-way function value $(V_{i+a})$.

7. The method according to the previous claim, wherein this number is:

   - an increment number (a) when the local counter values $(C_i)$ and $(C_{i+a})$ are generated from incremental local counters; or
   - a random number (a) when the local counter values $(C_i)$ and $(C_{i+a})$ are generated from random local counters.

8. The method according to any of the preceding claims, wherein controlling (24) the regularity of the token $(T_{i+1}, T_{i+a})$ comprises a check (32) that a local counter value $(C_{i+1}, C_{i+a})$ included in the token counter value $(CT_{i+1}, CT_{i+a})$ of the token $(T_{i+1}, T_{i+a})$ of the NDEF message (MC, MS) received, is equal to a local counter value $(C_p)$ computed based on a local counter value $(C_i)$ comprised in the token $(T_i)$ of the previous NDEF message (MP).

9. The method according to any of the preceding claims, wherein controlling (24) the regularity of the token $(T_{i+1}, T_{i+a})$ comprises a check (36) that a local counter value $(C_{i+1}, C_{i+a})$ is strictly:

   - greater than the local counter value $(C_i)$ comprised in the token $(T_i)$ of the previous NDEF message (MP); and
   - smaller than the computed local counter value $(C_p)$ incremented by the constant value equal to the number one, this local counter value $(C_p)$ being computed based on the local counter value $(C_i)$.

10. System (1) for verifying the conformity of a NDEF message (MC, MS) based on a processing of a previous NDEF message (MP) sent by a same transponder (2) to an electronic system (3) configured to process such messages (MP, MC, MS), the system (1) implementing the method according to any of the preceding claims.

11. System (1) according to the previous claim, wherein the electronic system (3) consisting of a transponder reader (4) and a server (5) to which this transponder reader (4) is connected.

12. System (1) according to the claim 11, wherein the electronic system (3) consisting solely of a transponder reader (4).

# Fig. 1

# Fig. 2

# Fig. 3

Europäisches
Patentamt

European
Patent Office

Office européen
des brevets

**EUROPEAN SEARCH REPORT**

**Application Number**

EP 23 21 8052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/092087 A1 (HILLAN JOHN [GB] ET AL) 19 March 2020 (2020-03-19) * paragraph [0033] - paragraph [0041]; figures 3, 6 * * paragraph [0135] * | 1-12 | INV. H04W12/06 H04L9/32 H04W4/80 |
| A | US 2015/019892 A1 (AGRAWAL JAGADISH KUMAR [US] ET AL) 15 January 2015 (2015-01-15) * paragraph [0029] - paragraph [0051] * | 1-12 | |
| A | US 2013/241709 A1 (TIEDEMANN STEPHEN [DE]) 19 September 2013 (2013-09-19) * paragraph [0028] - paragraph [0037] * | 1-12 | |

TECHNICAL FIELDS
SEARCHED (IPC)

H04W
H04L

The present search report has been drawn up for all claims

| Place of search | Date of completion of the search | Examiner |
|---|---|---|
| Munich | 31 May 2024 | Tenbieg, Christoph |

EPO FORM 1503 03.82 (P04C01)

## ANNEX TO THE EUROPEAN SEARCH REPORT
## ON EUROPEAN PATENT APPLICATION NO.

EP 23 21 8052

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | Publication date | Patent family member(s) | | Publication date |
|---|---|---|---|---|
| US 2020092087 A1 | 19-03-2020 | NONE | | |
| US 2015019892 A1 | 15-01-2015 | CN | 105993132 A | 05-10-2016 |
| | | CN | 110632982 A | 31-12-2019 |
| | | EP | 3022849 A1 | 25-05-2016 |
| | | JP | 6017737 B1 | 02-11-2016 |
| | | JP | 6247366 B2 | 13-12-2017 |
| | | JP | 2016536686 A | 24-11-2016 |
| | | JP | 2017022768 A | 26-01-2017 |
| | | KR | 20160055785 A | 18-05-2016 |
| | | US | 2015019892 A1 | 15-01-2015 |
| | | WO | 2015009632 A1 | 22-01-2015 |
| US 2013241709 A1 | 19-09-2013 | CN | 103023541 A | 03-04-2013 |
| | | EP | 2573970 A2 | 27-03-2013 |
| | | JP | 2013069277 A | 18-04-2013 |
| | | US | 2013241709 A1 | 19-09-2013 |

EPO FORM P0459

For more details about this annex : see Official Journal of the European Patent Office, No. 12/82